Europäisches Patentamt

European Patent Office

Office européen des brevets

(19)

(11) Publication number: **0 098 064**
A1

(12) **EUROPEAN PATENT APPLICATION**

(21) Application number: 83303335.0

(22) Date of filing: 09.06.83

(51) Int. Cl.³: **B 65 G 7/06**
H 04 Q 1/10, H 05 K 13/02
H 02 B 1/02

(30) Priority: 09.06.82 GB 8216716

(43) Date of publication of application:
11.01.84 Bulletin 84/2

(84) Designated Contracting States:
BE CH DE FR IT LI NL SE

(71) Applicant: The General Electric Company, p.l.c.
1 Stanhope Gate
London W1A 1EH(GB)

(72) Inventor: Elliott, Donald Charles
20 Spinney Hill
Warwick, CV34 5SF(GB)

(72) Inventor: Sykes, David George
321 Green Lane
Finham Coventry, CV3 6EH(GB)

(74) Representative: Dolwin, John Davison
Central Patent Department The General Electric
Company plc Hirst Research Centre East Lane
Wembley Middlesex HA9 7PP(GB)

(54) Load-transporting and positioning arrangements.

(57) An air-cushion raft or pallett for transporting assembled and commissioned vertical mounting plane exchange equipment. The raft is assembled and attached to the base of the equipment, and is dismantled after use for return and reuse.

EP 0 098 064 A1

Croydon Printing Company Ltd

COMPLETE DOCUMENT

The present invention relates to load-transporting and positioning arrangements.

According to the present invention an arrangement for transporting and positioning a load carried by or distributed over a supporting structure comprises two frame members arranged to lie generally parallel to one another one on either side of said supporting structure, two or more cross members each arranged to be detachably secured to said frame members and to said supporting structure, a plurality of air-cushion support devices arranged to be attached beneath said frame members, and means to control the air flow to said devices both individually and collectively, whereby the supporting structure may be lifted and its attitude controlled.

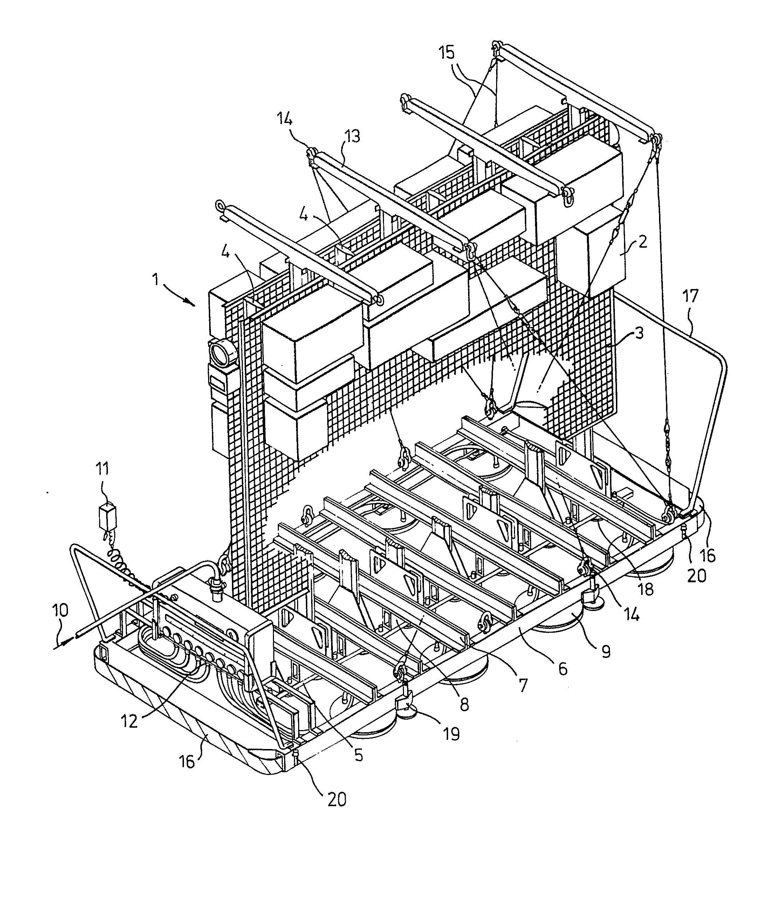

A load-transporting and positioning arrangement in accordance with the present invention will now be described with reference to the accompanying drawing, which shows an isometric view of the arrangement in use.

Referring to the drawing a typical load for which the transporting and positioning arrangement is intended comprises a two to three metre length of "vertical mounting plane" electronic exchange equipment 1, in which modular electronic units 2 are attached to vertically disposed perforated steel sheet members 3, which in turn are secured to vertical columns 4 extending from horizontal base members 5. Such equipment is described for example in co-pending Patent Application No. 8117627.

The transporting and positioning arrangement comprises a pair of side frame members 6 which are positioned generally parallel to the plane of the sheet members 3 and to the horizontal base members 5, one on either side of the length of equipment structure to be transported. A plurality of transoms or cross-members 7 are introduced between the columns 4 and are secured to the frame members 6 to form a ladder-type raft. The cross-members 7 are attached to the base members 5 by way of spacers 8.

Each frame member 6 has secured beneath it a plurality of air-cushion lifting "pads" 9, and these pads 9 are supplied individually with compressed air from a supply line 10 by way of a collective air flow controller operated by a hand-held unit 11 and individual adjustable controls in a unit 12.

The equipment 1 may be steadied on the raft by cross beams 13 attached to the upper ends of columns 4, the beams being tied to the side frames 6 by way of eyebolts 14 and steel wires 15. Fenders 16 and a hand-rail 17 may be attached to the side frame members 6 if required.

The transporting arrangement may be secured to the equipment 1 while that equipment rests on its own levelling screw feet 18. The side frame members 6 may also be provided with levelling jacks 19, together with a level-indicating arrangement comprising interconnected fluid-level indicators 20.

Once the transporting raft has been assembled and secured to the equipment 1 the side frame jacks 19 are lowered to just touch the underlying floor and the equipment feet 18 are fully retracted. Compressed air is then supplied to all the lifting pads 9, and the individual control valves of the unit 12 are adjusted to compensate for any uneven weight distribution of the equipment 1 so that the pads 9 off-load all the jacks 19, whereafter these jacks may be retracted. The equipment 1 on its transporting arrangement may then be floated on the air cushion pads 9 to its required position. It will be appreciated that in this way large sections of exchange equipment may be assembled, tested and commissioned under factory conditions and then transported easily to a required site. If necessary during the transporting operation the equipment 1 may be lifted on and off a vehicle by lifting attachments (not shown) placed close to the levelling jacks 19.

When the equipment 1 has been positioned where required the pads 9 can be "deflated" and the equipment levelled and, if required, raised or lowered using the jacks 19 and the level indicators 20 on the side frame members 6. In this way the equipment 1 may be aligned with respect to other sections and with respect to any false floor supports. Finally the weight of the equipment 1 is transferred to its own levelling feet 18 and the transporting arrangement dismantled for return and reuse.

According to another aspect of the invention a method of installing electrical or electronic apparatus comprises the steps of assembling on a supporting structure, and testing, at least part of said apparatus at one location, securing to said supporting structure an air cushion transporting and positioning arrangement, and transporting said structure and the apparatus assembled thereon to a desired location utilising said air cushion arrangement.

Claims

1.     An arrangement for transporting and positioning a load (1, 2) carried by or distributed over a supporting structure (3, 4, 5) comprising two frame members (6) arranged to lie generally parallel to one another one on either side of said supporting structure (3, 4, 5), two or more cross members (7) each arranged to be detachably secured to said frame members (6) and to said supporting structure (3, 4, 5), a plurality of air-cushion devices (9) arranged to be attached beneath said frame members (6), and means (11, 12) to control the air flow to said devices both individually and collectively, whereby the supporting structure (3, 4, 5) may be lifted and its attitude controlled.

2.     A method of installing electrical or electronic apparatus (1, 2) comprising the steps of assembling on a supporting structure (3, 4, 5), and testing, at least part of said apparatus (1, 2) at one location, securing to said supporting structure an air cushion transporting and positioning arrangement (6, 7, 9, 11, 12), and transporting said structure and the apparatus assembled thereon to a desired location utilising said air cushion arrangement (6, 7, 9, 11, 12).

European Patent
Office

EUROPEAN SEARCH REPORT

0098064

Application number

EP  83 30 3335

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 807 035  (MOORMAN)<br>* Column 20, lines 24-51; column 5, lines 31-39; figures 1-3 * | 1,2 | B 65 G   7/06<br>H 04 Q   1/10<br>H 05 K  13/02<br>H 02 B   1/02 |
| Y | US-A-3 762 335  (BAKER)<br>* Column  2, lines 18-55; column 3,  lines  51-58; column 4, lines 42-68; figure 1 * | 1 | |
| Y | DE-A-2 907 412  (GROSSE)<br>* Whole document * | 2 | |

TECHNICAL FIELDS
SEARCHED (Int. Cl. ³)

B 65 G
H 05 K
H 02 B
H 04 Q

The present search report has been drawn up for all claims

| Place of search | Date of completion of the search | Examiner |
|---|---|---|
| THE HAGUE | 09-09-1983 | OSTYN T.J.M. |